# EUROPÄISCHE PATENTSCHRIFT

(11) **EP 2 516 868 B1**
(45) Veröffentlichungstag und Bekanntmachung des Hinweises auf die Patenterteilung: **03.07.2019**
(21) Anmeldenummer: 11791204.8
(22) Anmeldetag: 10.11.2011
(51) Int. Cl.: F03B 3/10, F03B 11/00, F04D 1/04, F04D 29/16

(54) **WASSERTURBINE ODER WASSERPUMPE ODER SONSTIGE HYDRAULISCHE MASCHINE**
WATER TURBINE OR WATER PUMP OR OTHER HYDRAULIC MACHINE
TURBINE À EAU OU POMPE À EAU OU AUTRE MACHINE HYDRAULIQUE

(30) Priorität: 18.01.2011 DE 102011008869
(43) Veröffentlichungstag der Anmeldung: 31.10.2012
(73) Patentinhaber: Voith Patent GmbH, 89522 Heidenheim (DE)
(72) Erfinder: STUMMER, Manfred, 89520 Heidenheim (DE)
(74) Vertreter: Dr. Weitzel & Partner
(86) Internationale Anmeldenummer: PCT/EP2011/005655
(87) Internationale Veröffentlichungsnummer: WO 2012/097839

(56) Entgegenhaltungen:
- FR-A1- 2 007 736
- US-A- 4 643 635

## Beschreibung

Die Erfindung betrifft das Gebiet der hydraulischen Maschinen, insbesondere eine Wasserturbine oder eine Pumpturbine oder eine Pumpe. Sie betrifft insbesondere das Gebiet der Labyrinthdichtungen und des Laufrades. Als Beispiel für eine solche hydraulische Maschine wird auf DE 198 08 877 A1 verwiesen.

Die Erfindung geht aus von US 4 643 635 A. Hierin ist eine hydraulische Maschine gemäß dem Oberbegriff von Anspruch 1 beschrieben.

Bei solchen Maschinen läuft ein Laufrad innerhalb eines feststehenden Gehäuses um, so dass zwischen den beiden ein Spalt entsteht. Der Spalt muss gegen Leckage abgedichtet werden, um den Leckagestrom so weit wie möglich zu minimieren. Zum Abdichten sind Labyrinthdichtungen bekannt. Diese gibt es in einer Vielzahl von Ausführungsformen. Die einfachste Form ist das sogenannte glatte Labyrinth, bei welchem die Begrenzungswände des Lichtspaltes frei von Sprungstellen sind und mehr oder minder parallel nebeneinander verlaufen. Eine weitere Ausführungsform ist das gestufte Labyrinth, bei dem die miteinander zusammenarbeitenden Flächen treppenförmig sind. Ferner sind zahlreiche Labyrinthe bekannt, die eine Vielzahl von kleinen ringförmigen Kammern aufweisen, sowie ringspaltförmige Kanäle, die die Kammern miteinander verbinden. Die Erfindung betrifft eine derartige gattungsgemäße Labyrinthdichtung.

Solch bekannte Labyrinthdichtungen gehen beispielsweise aus der DE 1 551 223 A, der DE 18 92 39 C sowie der US 59 24 844 A hervor.

Die DE 1 807 443 beschreibt ein Verfahren und eine Einrichtung zum Betrieb einer Pumpturbinenanlage, die vorübergehend ohne Arbeitsmedium, also Wasser, gefahren wird. Zum Abdichten des Leckagestroms zwischen dem Laufrad und dem Saugrohr der Pumpe und Turbine sowie zur Abdichtung zwischen dem Laufrad und dem übrigen Gehäuse werden gestufte Labyrinthe oder glatte Labyrinthe verwendet. Um die Verlustleistung der Pumpturbinenanlage zu reduzieren, werden beim ausschließlichen Betrieb der Pumpe die Spaltweiten der Labyrinthdichtungen der Pumpe minimiert, während die der Turbine maximiert werden. Das Laufrad der Turbine läuft sodann in Luft um. Im Turbinenbetrieb werden umgekehrt die Spaltweiten der Labyrinthdichtungen der Turbine minimiert, die der Pumpe maximiert, wobei dann auch das Pumpenlaufrad in Luft umläuft. Beim Übergang vom Pump- zum Turbinenbetrieb oder umgekehrt wird hierzu die gesamte Turbinenwelle mit dem Pumpen- und Turbinenlaufrad in Axialrichtung verschoben.

Bei hydraulischen Maschinen der genannten Art besteht somit das Problem der Verlustleistung, die besonders hoch ist, wenn die Maschine entleert, und somit nicht mit Wasser, sondern mit Luft gefüllt ist. Diese Verluste gehen zu einem großen Teil auf die Luftreibung im Spalt von Dichtungen zurück, zum Beispiel von Labyrinthdichtungen zwischen dem Laufrad sowie stationären Bauteilen.

Der wasserfreie Zustand tritt vor allem bei einem Maschinensatz auf, der eine Wasserturbine und eine Wasserpumpe umfasst, die auf ein und derselben Welle sitzen und drehfest miteinander gekoppelt sind, so wie dies beispielsweise bei Speicherkraftwerken der Fall ist. Dabei ist während einer gewissen Zeitspanne die eine Maschine mit Wasser gefüllt, während die andere in Luft umläuft.

Der Erfindung liegt die Aufgabe zugrunde, eine Maschine gemäß dem Oberbegriff von Anspruch 1 derart zu gestalten, dass die Leerlaufverluste, bei der die Maschine nicht von Wasser durchströmt ist, minimiert werden.

Diese Aufgabe wird durch die Merkmale von Anspruch 1 gelöst.

Demgemäß werden der gesamte Laufradbereich oder zumindest die Dichtspalte in den arbeitsfreien Phasen der Maschine evakuiert. Es wird somit jedem oder wenigstens einem Dichtspalt oder dem gesamten Laufradbereich ein Anschluss zum Anlegen eines Unterdruckes zugeordnet. Der Anschluss befindet sich an einer entsprechenden Stelle, die ein effizientes Besaugen des Dichtspaltes ermöglicht, zum Beispiel am Leitradring oder am Deckel einer Wasserturbine oder einer Wasserpumpe. Das Besaugen kann intermittierend erfolgen. Es kann automatisiert werden, indem eine Saugeinrichtung nur bei Leerlauf der Maschine eingeschaltet, und während der Arbeitsphasen wieder abgeschaltet wird.

Ein Evakuieren kann vollständig oder teilweise erfolgen.

Wenn zum Kühlen der beteiligten Bauteile erforderlich, kann das Evakuieren unterbrochen und durch ein Belüften des Dichtspaltes ersetzt werden. Das Evakuieren und Belüften kann zyklisch erfolgen und automatisch gesteuert werden.

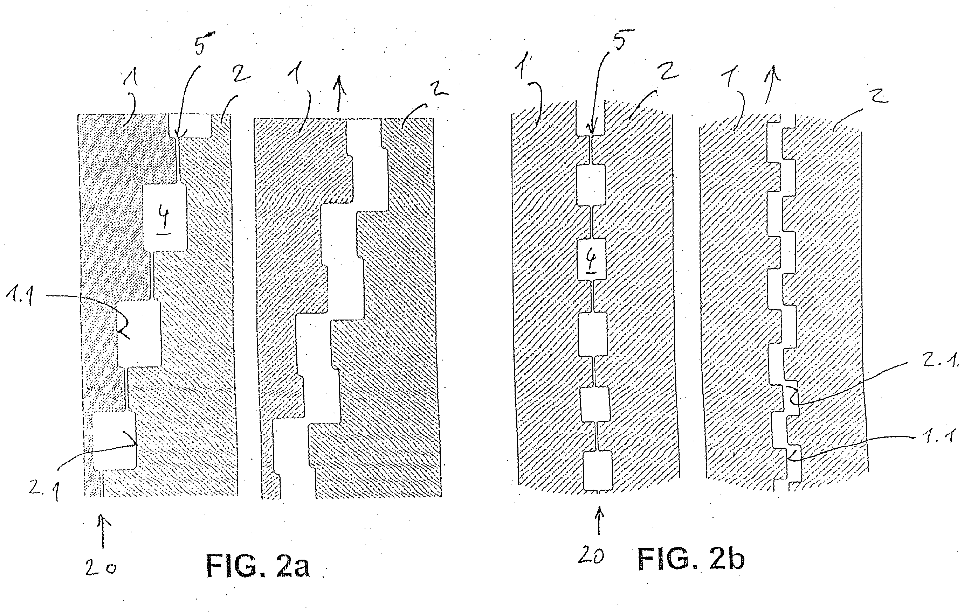

Zusätzlich wird auch die Weite des Dichtspaltes verändert, so wie in den Ansprüchen 1 bis 7 definiert und in den Figuren 2a bis 4b dargestellt.

Die Erfindung bringt einen erheblichen Fortschritt mit sich. Es lassen sich Verluste von bis zu einem Prozent der Nennleistung der Maschine einsparen.

Die Erfindung ist anhand der Zeichnung näher erläutert. Darin ist im Einzelnen folgendes dargestellt:
- Figur 1: zeigt eine Francis-Turbine in einem Axialschnitt.
- Figuren 2a u. 2b: zeigen unterschiedliche Ausführungsformen der Labyrinthdichtung in einer Betriebsstellung und einer Nicht-Betriebsstellung des stationären Bauteils.
- Figuren 3a. u. 3b: zeigen eine vergrößerte schematische Darstellung der Detailansicht A der Labyrinthdichtung aus Figur 1.
- Figuren 4a u. 4b: zeigen eine vergrößerte schematische Darstellung der Detailansicht B der Labyrinthdichtung gemäß Figur 1.

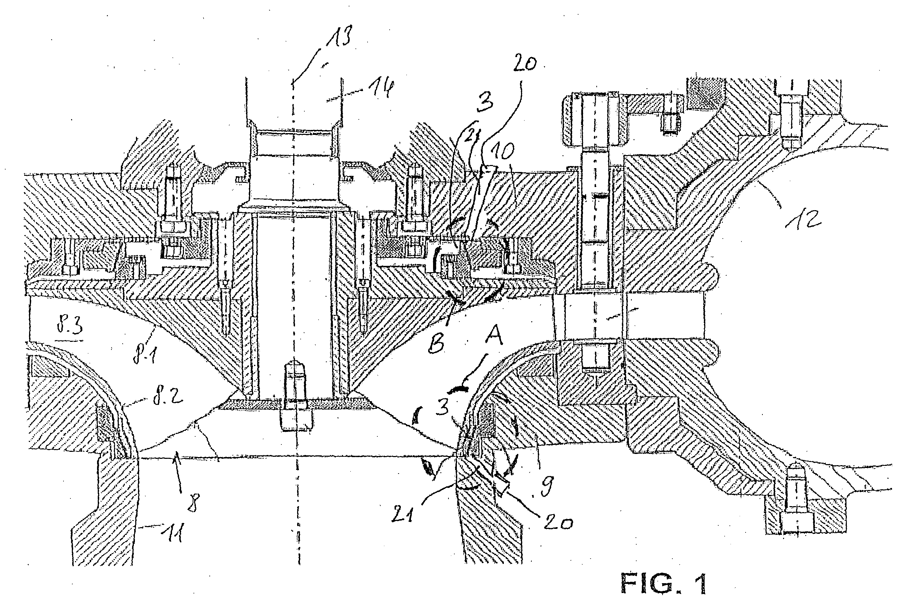

Die in Figur 1 gezeigte Francis-Turbine weist als Hauptelement ein Laufrad 8 auf, einen Leitradring 9, einen Turbinendeckel 10, ein Saugrohr 11 sowie eine Einlaufspirale 12 auf. Das Laufrad 8 weist einen Laufradboden 8.1, einen Laufradkranz 8.2 sowie eine Mehrzahl von Laufradschaufeln 8.3 auf. Es ist drehfest mit einer Turbinenwelle 14 ausgeführt, welche sich um eine Drehachse 13 dreht.

Eine Labyrinthdichtung 3 ist zwischen dem Laufrad 8, Leitradring 9 und dem Saugrohr 11 (Detailausschnitt A) und dem Laufrad 8 und dem Turbinendeckel 10 (Detailausschnitt B) angeordnet. Jede der beiden Labyrinthdichtungen 3 weist ein stationäres Bauteil 1 sowie ein umlaufendes Bauteil 2 aus, die vorliegend konzentrisch zur Drehachse 13 der Turbinenwelle 14 des Laufrades angeordnet und kreisringförmig ausgeführt sind.

Die entscheidenden Teile der Erfindung sind Vakuumanschlüsse 20 sowie Zuleitungen 21. So befindet sich in Saugrohr 11 ein Vakuumkanal 21 von außen nach innen verlaufend; Vakuumanschluss 20 befindet sich an der Außenfläche des oberen Endes von Saugrohr 11. Siehe Detailausschnitt A.

Ein weiterer Vakuumanschluss 20 mit Vakuumleitung 21 ist der Labyrinthdichtung 3 im Detailausschnitt B zugeordnet. Hier verläuft ein Vakuumkanal 21 durch den Turbinendeckel 10 hindurch.

Aus den beiden Figuren 2a und 2b erkennt man den genaueren Aufbau der beiden Bauteile 1 und 2 der erfindungsgemäßen Labyrinthdichtung 3 im Einzelnen.

In die beiden Bauteile 1 und 2 sind Aussparungen eingearbeitet. Die derart entstehenden Begrenzungsflächen 1.1 und 2.1 der beiden Bauteile 1 und 2 bilden miteinander vorliegend ringförmige Kammern 4 sowie diese leitend miteinander verbindende ringspaltförmige Kanäle 5.

In der Figur 2a verlaufen die einander zugewandten Begrenzungsflächen 1.1 und 2.1 der beiden Bauteile 1 und 2 der Labyrinthdichtung 3 kegelig, wodurch sich ein gestuftes Labyrinth ergibt. Bei der Darstellung gemäß Figur 2b sind diese zylindrisch (glattes Labyrinth). Auch könnten die Kammern 4 sowohl bei kegeliger als auch bei gestufter Ausführung der beiden Bauteile 1 und 2 lediglich in einem der Bauteile, beispielsweise ausschließlich im rotierenden oder im stationären Bauteil vorgesehen sein. Dies ist jedoch nicht zwingend notwendig.

Die jeweils linke Darstellung in den beiden Figuren 2a und 2b zeigt dabei die Ausgangstellung des stationären Bauteils 1 zum umlaufenden Bauteil 2. Dies entspricht einer Betriebsstellung, in der die Labyrinthdichtung 3 der hydraulischen Maschine einen definierten Leckagestroms an Arbeitsmedium zulässt. Im Gegensatz dazu zeigt die jeweils rechte Darstellung in den beiden Figuren 2a und 2b eine Position, in der das stationäre Bauteil 1 gegenüber dem umlaufenden Bauteil 2 in Richtung eines Leckagestromes verschoben ist, das heißt in axialer Richtung.

Die beiden Bauteile haben dabei einen vergrößerten gegenseitigen radialen Abstand (Nicht-Betriebs-Stellung). Wie man aus den Figuren 2a und 2b erkennen kann, ist in der Nicht-Betriebsstellung die Spaltweite insbesondere der ringspaltförmigen Kanäle 5 erheblich vergrößert. Diese ermöglicht nun, dass bei Abschaltung des Arbeitsmediums nun anstelle des herkömmlichen Arbeitsmediums Luft durch die vergrößerten Spaltweite hindurchströmt. Die hindurch strömende Luft des in Luft umlaufenden Laufrads der hydraulischen Maschine sorgt zum einen dafür, dass Ventilationsverluste vermieden werden, andererseits wird die Labyrinthdichtung in diesem Fall ausschließlich durch die auf diese Weise bewegte Luft gekühlt.

Die Veränderung der Spaltweite geht somit darauf zurück, dass die beiden Bauteile 1 und 2 auf ihren einander zugewandten Flächen eine gestufte Konfiguration aufweisen. Bei der Ausführungsform gemäß Figur 2b handelt es sich um regelmäßige Stufen. Bei der rechten Darstellung von Figur 2b erkennt man, dass jeweils Vorsprünge des einen Bauteils Lücken des anderen Bauteils entsprechen.

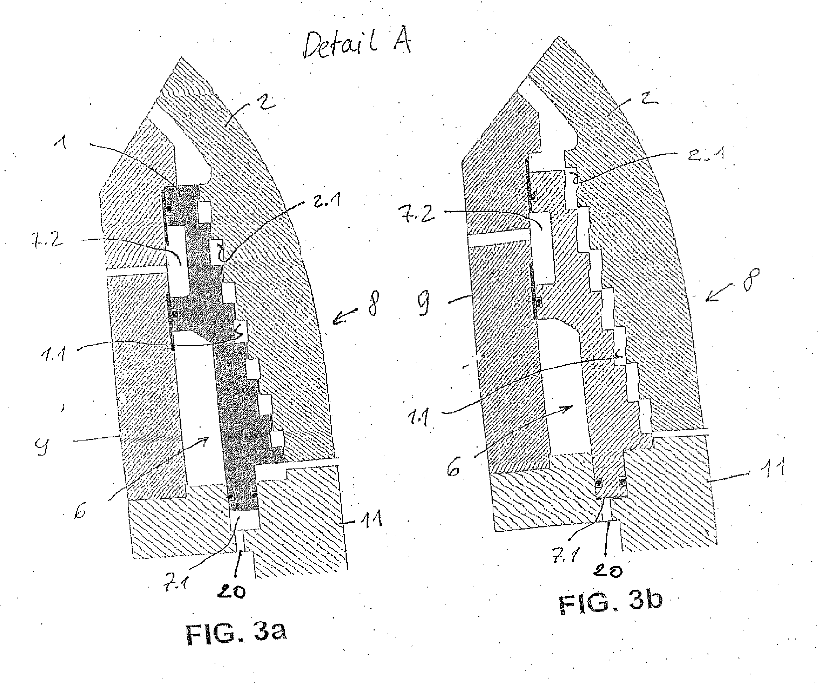

In den Figuren 3a und 3b ist eine vergrößerte Darstellung einer erfindungsgemäßen Labyrinthdichtung gemäß der in Figur 1 gezeigten Detailansicht A dargestellt. Die linke Darstellung gemäß Figur 3a entspricht der Betriebsstellung, wohingegen die Darstellung gemäß der Figur 3b die Nicht-Betriebsstellung des stationären Bauteils 1 zeigt. Hierbei ist das stationäre Bauteil 1 als sogenannter Spaltring 6 ausgeführt. Letzterem ist eine Verschiebeeinrichtung zugeordnet, um den Spaltring 6 zwischen der Betriebsstellung und der Nicht-Betriebsstellung zu verschieben.

Im vorliegenden Fall umfasst die Verschiebeeinrichtung einen Kolben, der von dem Spaltring 6 selbst gebildet wird, wobei der hier gezeigte Kolben einen ersten Kolbenraum 7.1 sowie einen zweiten Kolbenraum 7.2 zusammen mit dem Leitradring 9 und einem Saugrohr 11 teilweise begrenzt. Vorliegend ist der Spaltring 6 nämlich zwischen dem Laufrad 8, welches hier als umlaufendes Bauteil 2 fungiert, und dem Leitradring 9 eingeschlossen.

Die beiden Kolbenräume 7.1 und 7.2 sind über eine angedeutete Zuleitung mit einer nicht gezeigten Druckversorgung verbunden, um beide Kolbenräume 7.1 und 7.2 beispielsweise wechselweise mit Druckmedium zu beaufschlagen. So wird durch die Druckbeaufschlagung alleinig des Kolbenraums 7.1 der Spaltring 6 in der in Figur 3a gezeigten Stellung nach oben, also in die Betriebsstellung, verschoben, wohingegen dieser bei Druckbeaufschlagung alleinig des Kolbenraums 7.2 in Richtung auf die Nicht-Betriebsstellung bewegt wird. Die Endpositionen werden mechanisch durch Anschläge begrenzt.

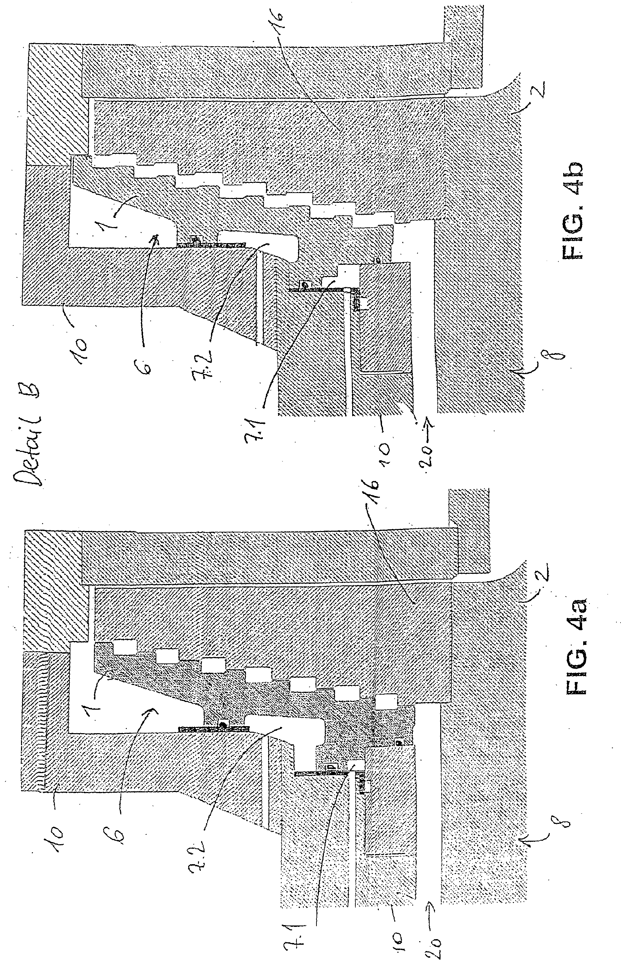

Die Figuren 4a und 4b zeigen eine vergrößerte schematische Darstellung der erfindungsgemäßen Labyrinthdichtung aus Figur 1 gemäß der Detailansicht B. Die Figur 4a zeigt wiederum die Betriebsstellung, wohingegen die Figur 4b die Nicht-Betriebsstellung des stationären Bauteils 1 zeigt. Man erkennt, dass der Spaltring 6 von dem Turbinendeckel 10 und einem zusammen mit dem Laufrad 8 umlaufenden weiteren Spaltring 16 umschlossen ist. Beide Spaltringe 6 und 16 können bei Abnutzung vergleichsweise einfach ausgetauscht werden.

Um einen Durchtritt von Druckmedium aus den Kolbenräumen 7.1 und 7.2 zu verhindern, können Dichtungen zwischen dem Spaltring 6 und dem Turbinendeckel 10, wie in den vorangegangenen Figuren dargestellt, vorgesehen sein.

In allen Figuren 2a bis 4b ist ein Vakuumanschluss 20 angedeutet.

Anstelle der dargestellten Verschiebeeinrichtung könnte der Spaltring 6 auch magnetisch, elektrisch, elektromagnetisch oder mechanisch betätigt werden. Im letzten Fall könnten dazu beispielsweise Stellantriebe, Gewindespindeln oder ähnliches Verwendung finden.

Durch die Erfindung werden folgende Vorteile erreicht:
Bei hydraulischen Maschinen, bei denen das Laufrad ausgeblasen wird, das heißt in Luft umläuft und dessen Druck dem anstehenden Unterwasserdruck entspricht, betragen die Ventilationsverluste ca. 1 Prozent der Nennleistung der hydraulischen Maschine. In atmosphärischer Luft betragen die Ventilationsverluste hingegen ca. 0,5 Prozent der Nennleistung.

Die genannten Ventilationsverluste teilen sich in etwa wie folgt auf:
- 1/4 rührt von der Ventilation des Laufrades in Luft.
- 3/4 rühren von der mit Wasser gekühlten Labyrinthdichtung.

Wie oben erwähnt, können die beiden Maßnahmen angewandt werden, somit das Evakurieren des gesamten Laufradbereiches beziehungsweise eines Teiles hiervon, sowie das Vergrößern der Spaltweite, jeweils im Nicht-Betrieb. In jedem Falle werden die Reibungs- und Ventilationsverluste wirksam minimiert.

Durch Vergrößern der Spaltweite im Nicht-Betrieb der hydraulischen Maschine, nämlich dann, wenn kein Wasser auf deren Laufrad auftrifft, wird die Luftzirkulation in der Labyrinthdichtung verbessert. Aufgrund der relativ großen Spaltweite (das stationäre Bauteil befindet sich in seiner Nicht-Betriebsstellung) wird die Luftreibung zwischen dem umlaufenden Bauteil und der Luft minimiert, was zu einer geringeren Wärmeentwicklung in der Labyrinthdichtung führt.

Dabei wird die maximale Spaltweite der Labyrinthdichtung bevorzugt derart gewählt, dass im Nicht-Betrieb der hydraulischen Maschine ohne Wasserkühlung der Labyrinthdichtung dieselbe Kühlleistung durch Luftkühlung erreicht wird, wie mit dem Leckagestrom an Wasser. Man könnte auch sagen, dass die Spaltweite derart eingestellt wird, dass die (kovenktiven) mittleren Wärmeübertragungskoeffizienten des stationären und/oder umlaufenden Bauteils in Bezug auf das sie umgebende Medium sowohl im Betrieb (Betriebsstellung des stationären Bauteils) der hydraulischen Maschine als auch im Nicht-Betrieb (Nicht-Betriebsstellung des stationären Bauteils) im Wesentlichen gleich sind.

Mit der erfindungsgemäßen Labyrinthdichtung können die Ventilationsverluste deutlich reduziert werden. Dabei wird zugleich die Luftreibung wie auch die Wärmeentwicklung erheblich verringert, und das obwohl die Labyrinthdichtung im Nicht-Betrieb ausschließlich mit Luft gekühlt wird.

Die erfindungsgemäße Lösung bringt folgende Vorteile:
- Sowohl Herstellungsaufwand als auch die Betriebskosten sind gegenüber bekannten Maschinen minimiert,
- die Verlustleistung der Maschine ist reduziert,
- die Kühlung der Labyrinthdichtung ist optimiert.
Umfasst eine Anlage zwei oder mehrere Labyrinthdichtungen, die eine gemeinsame Welle haben, so können die Labyrinthdichtungen für jede Maschine wahlweise in die eine oder in die andere Position gebracht werden - Betriebsstellung oder Nichtbetriebsstellung. Somit können die Labyrinthdichtungen aller Maschinen oder einiger Maschinen in ein und dieselbe Position gebracht werden.

Dies gilt auch für den Fall einer einzigen Maschine mit zwei Läbyrinthdichtungen, die auf derselben Welle sitzen. Die Erfindung lässt sich auch bei Dichtungen mit glatten (nicht -gestuften) Dichtspalten anwenden.

### Bezugszeichen liste

- 1: Bauteil
- 1.1: Begrenzungsfläche
- 2: Bauteil
- 2.1: Begrenzungsfläche
- 3: Labyrinthdichtung
- 4: Kammer
- 5: Kanal
- 6: Spaltring
- 7: Kolben
- 7.1: erster Kolbenraum
- 7.2: zweiter Kolbenraum
- 8: Laufrad
- 8.1: Laufradboden
- 8.2: Laufradkranz
- 8.3: Laufradschaufeln
- 9: Leitradring
- 10: Turbinendeckel
- 11: Saugrohr
- 13: Drehachse
- 14: Turbinenwelle
- 16: Spaltring
- 20: Vakuumanschluss
- 21: Vakuumkanal

## Patentansprüche

1. Wasserturbine oder Wasserpumpe oder sonstige hydraulische Maschine,
1.1 mit einem stationären (1) und einem umlaufenden Bauteil (2);
1.2 zwischen den Bauteilen (1, 2) befindet sich weningstens ein Dichtspalt, durch den beim Betrieb der hydraulischen Maschine ein Leckagestrom zum Kühlen /oder Schmieren einer Dichtung (3) strömt;
1.3 es ist wenigstens ein Anschluss (20) zum vollständigen oder teilweisen Evakuieren des gesamten Laufradbereiches oder des Dichtspaltes in arbeitsfreien Phasen der Wasserturbine oder der Wasserpumpe oder der hydraulischen Maschine vorgesehen.
**gekennzeichnet durch** die folgenden Merkmale:
1.4 der Dichtspalt ist als Labyrinthdichtung (3) ausgeführt und umfasst eine Mehrzahl von ringförmigen Kammern (4) sowie diese leitend miteinander verbindende ringspaltförmige Kanäle (5);
1.5 das stationäre Bauteil (1) ist zur Einstellung der Spaltweite der ringspaitförmigen Kanäle (5) in Axialrichtung relativ zum umlaufenden Bauteil (2) zwischen einer Betriebsstellung und einer Nicht-Betriebsstellung in Richtung eines Leckagestromes verschiebbar gelagert.

2. Wasserturbine oder Wasserpumpe oder sonstige hydraulische Maschine gemäß Anspruch 1, **dadurch gekennzeichnet, dass** die axiale Erstreckung der Kammern (4) in Verschieberichtung des stationären Bauteils (1) größer ist als die axiale Erstreckung der ringspaltförmigen Kanäle (5).

3. Wasserturbine oder Wasserpumpe oder sonstige hydraulische Maschine gemäß einem der Ansprüche 1 oder 2, **dadurch gekennzeichnet, dass** einander zugewandte, die Labyrinthdichtung bildende Begrenzungsflächen (1.1, 2.1) der beiden Bauteile (1, 2) auf einer Zylinder- oder Kegelmantelfläche liegen und beide Bauteile (1, 2) zueinander konzentrisch angeordnet sind,

4. Wasserturbine oder Wasserpumpe oder sonstige hydraulische Maschine gemäß einem der Ansprüche 1 bis 3, **dadurch gekennzeichnet, dass** das stationäre Bauteil (1) als Spaltring (6) ausgeführt ist und eine Verschiebeeinrichtung umfasst oder an einer solchen angeschlossen ist, um den Spaltring (6) zwischen der Betriebstellung und der Nicht-Betriebstellung zu verschieben.

5. Wasserturbine oder Wasserpumpe oder sonstige hydraulische Maschine gemäß Anspruch 4, **dadurch gekennzeichnet, dass** die Verschiebeeinrichtung zur Verschiebung des Spaltringes (6) magnetisch, elektrisch, elektromagnetisch, pneumatisch, hydraulisch oder mechanisch betätigbar ist.

6. Wasserturbine oder Wasserpumpe oder sonstige hydraulische Maschine gemäß Anspruch 4, **dadurch gekennzeichnet, dass** die Verschiebeeinrichtung einen Kolben (7) umfasst, der von dem Spaltring (6) gebildet wird und der Kolben einen ersten Kolbenraum (7.1) und einen zweiten Kolbenraum (7.2) wenigstens teilweise begrenzt, wobei beide Kolbenräume (7.1, 7.2) wechselweise über eine pneumatische oder hydraulische Druckversorgung beaufschlagbar sind.

7. Wasserturbine oder Wasserpumpe oder sonstige hydraulische Maschine gemäß einem der Ansprüche 1 bis 6, **dadurch gekennzeichnet, dass** die verschiedenen Labyrinthdichtungen unabhängig voneinander oder gemeinsam miteinander in die Betriebsstellung oder Nicht-Betriebsstellung verbringbar sind.

8. Wasserturbine oder Wasserpumpe oder sonstige hydraulische Maschine gemäß einem der Ansprüche 1 bis 7, **dadurch gekennzeichnet, dass** der Vakuumanschluss im oder am Saugrohr beziehungsweise Druckrohr der Maschine angeordnet ist.

9. Wasserturbine oder Wasserpumpe, oder sonstige hydraulische Maschine nach einem der Ansprüche 1 bis 8, **dadurch gekennzeichnet, dass** der Vakuumanschluss (20) im Bereich des Leitradringes (9) oder des Gehäusedeckels (10) angeordnet ist.

10. Wasserturbine oder Wasserpumpe oder sonstige hydraulische Maschine nach einem der Ansprüche 1 bis 9, **dadurch gekennzeichnet, dass** eine Einrichtung zum Aktivieren des Evakuierens in Abhängigkeit vom Betriebszustand der Maschine vorgesehen ist.

11. Wasserturbine oder Wasserpumpe oder sonstige hydraulische Maschine nach einem der Ansprüche 1 bis 10, **gekennzeichnet durch** eine Einrichtung zum automatischen Absperren des Dichtspaltes Anlegen des Vakuums.

## Claims

1. A water turbine or water pump or other hydraulic machine
1.1 comprising a stationary (1) and a revolving component (2);
1.2 at least one sealing gap is disposed between the components (1, 2), through which a leakage flow for cooling or lubricating of a seal (3) will flow during operation of the hydraulic machine;
1.3 at least one connection (20) is provided for the complete or partial evacuation of the entire blade wheel region or at of the sealing gaps in work-free phases of the water turbine or of the water pump of the hydraulic maschine.
**characterized by** the following features:
1.4 the sealing gap is arranged as a labyrinth seal (3) and comprises a plurality of annular chambers (4) and channels (5) which are shaped in the manner of an annular gap and which connect said chambers in a conductive manner with each other;
1.5 the stationary component (1) is displaceably held in the axial direction relative to the revolving component (2) between an operating position and a non-operating position in the direction of the leakage flow for setting the gap width of the channels (5) shaped in the manner of annular gaps.

2. Water turbine or water pump or other hydraulic machine according to claim 1, **characterized by** the following features **characterized in that** the axial extension of the chambers (4) in the direction of displacement of the stationary component (1) is larger than the axial extension of the channels (5) shaped in the manner of annular gaps.

3. Water turbine or water pump or other hydraulic machine according to one of the claims 1 or 2, **characterized in that** mutually facing the labyrinth (3) forming boundary surfaces (1.1, 2.1) of the two components (1, 2), which boundary surfaces form the labyrinth seal, are disposed on a cylinder or cone jacket surface, and both components (1, 2) are arranged concentrically with respect to each other.

4. A water turbine or water pump or other hydraulic machine according to one of the claims 1 to 3, **characterized in that** the stationary component (1) is arranged as a split ring (6) and comprises a displacing device or is connected to such a device in order to displace the split ring (6) between the operating position and the non-operating position.

5. A water turbine or water pump or other hydraulic machine according to claim 4, **characterized in that** the displacing device for displacing the split ring (6) can be actuated magnetically, electrically, electromagnetically, pneumatically, hydraulically or mechanically.

6. A water turbine or water pump or other hydraulic machine according to claim 4, **characterized in that** the displacing device comprises a piston (7) which is formed by the split ring (6) and the piston at least partly delimits a first piston chamber (7.1) and a second piston chamber (7.2), with both piston chambers (7.1, 7.2) being pressurizable in an alternating manner via a pneumatic or hydraulic pressure supply.

7. A water turbine or water pump or other hydraulic machine according to one of the claims 1 to 6, **characterized in that** the various labyrinth seals can be brought to the operating position or non-operating position independently from one another or together with one another.

8. A water turbine or water pump or other hydraulic machine according to one of the claims 1 to 7, **characterized in that** the vacuum connection is arranged in or on the suction pipe or the pressure pipe of the machine.

9. A water turbine or eater pump or other hydraulic machine according to one of the claims 1 to 8, **characterized in that** the vacuum connection (20) is arranged in the region of the guide wheel ring (9) or the housing cover (10).

10. A water turbine or water pump or other hydraulic machine according to one of the claims 1 to 9, **characterized in that** a device is provided for activating the evacuation depending on the operating state of the machine.

11. A water turbine according to one of the claims 1 to 10, **characterized by** a device for automatically blocking the sealing gap after applying the vacuum.

## Revendications

1. Turbine hydraulique ou pompe hydraulique ou autre machine hydraulique
1.1 avec un élément stationnaire (1) et un élément rotatif (2),
1.2 dans laquelle est prévu entre les éléments (1, 2) au moins un interligne d'étanchéité à travers lequel un écoulement de fuite s'écoule pendant le fonctionnement de la machine hydraulique pour refroidir ou lubrifier un joint d'étanchéité (3),
1.3 dans laquelle est prévu au moins un raccord (20) pour faire complètement ou partiellement le vide dans toute la région de la roue ou de l'interligne d'étanchéité dans les phases d'inactivité de la turbine hydraulique ou de la pompe hydraulique ou autre machine hydraulique,
**caractérisée en ce que**
1.4 l'interligne d'étanchéité est réalisé comme un joint à labyrinthe (3) et comprend plusieurs chambres annulaires (4) ainsi que des canaux (5) en forme de fente annulaire faisant communiquer celles-ci ;
1.5 l'élément stationnaire (1) est supporté avec possibilité de translation dans la direction d'un écoulement de fuite entre une position de service et une position hors service pour régler la largeur de fente des canaux (5) en forme de fente annulaire dans le sens axial par rapport à l'élément rotatif (2).

2. Turbine hydraulique ou pompe hydraulique ou autre machine hydraulique selon la revendication 1, **caractérisée en ce que** l'étendue axiale des chambres (4) dans le sens de translation de l'élément stationnaire (1) est plus grande que l'étendue axiale des canaux (5) en forme de fente annulaire.

3. Turbine hydraulique ou pompe hydraulique ou autre machine hydraulique selon l'une des revendications 1 ou 2, **caractérisée en ce que** des surfaces de délimitation (1.1, 2.1) des deux éléments (1, 2) qui se font face et forment le joint à labyrinthe se trouvent sur une surface d'enveloppe cylindrique ou conique et les deux éléments (1, 2) sont disposés de façon concentrique l'un par rapport à l'autre.

4. Turbine hydraulique ou pompe hydraulique ou autre machine hydraulique selon l'une des revendications 1 à 3, **caractérisée en ce que** l'élément stationnaire (1) est réalisé comme une bague à fente (6) et comprend un dispositif de translation ou est raccordé à un tel dispositif afin de déplacer la bague à fente (6) entre la position de service et la position hors service.

5. Turbine hydraulique ou pompe hydraulique ou autre machine hydraulique selon la revendication 4, **caractérisée en ce que** le dispositif de translation pour la translation de la bague à fente (6) peut être actionné de façon magnétique, électrique, électromagnétique, pneumatique, hydraulique ou mécanique.

6. Turbine hydraulique ou pompe hydraulique ou autre machine hydraulique selon la revendication 4, **caractérisée en ce que** le dispositif de translation comprend un piston (7) qui est formé par la bague à fente (6) et le piston délimite au moins partiellement un premier espace de piston (7.1) et un deuxième espace de piston (7.2), les deux espaces de piston (7.1, 7.2) pouvant être alimentés alternativement en pression pneumatique ou hydraulique.

7. Turbine hydraulique ou pompe hydraulique ou autre machine hydraulique selon l'une des revendications 1 à 6, **caractérisée en ce que** les différents joints à labyrinthe peuvent être amenés dans la position de service ou la position hors service indépendamment les uns des autres ou ensemble.

8. Turbine hydraulique ou pompe hydraulique ou autre machine hydraulique selon l'une des revendications 1 à 7, **caractérisée en ce que** le raccord de vide est disposé dans ou sur le tuyau d'aspiration ou le tuyau de refoulement de la machine.

9. Turbine hydraulique ou pompe hydraulique ou autre machine hydraulique selon l'une des revendications 1 à 8, **caractérisée en ce que** le raccord de vide (20) est disposé au niveau de l'anneau d'aubage directeur (9) ou du couvercle du corps (10).

10. Turbine hydraulique ou pompe hydraulique ou autre machine hydraulique selon l'une des revendications 1 à 9, **caractérisée en ce qu'**il est prévu un dispositif pour activer la création du vide en fonction de l'état de fonctionnement de la machine.

11. Turbine hydraulique ou pompe hydraulique ou autre machine hydraulique selon l'une des revendications 1 à 10, **caractérisée en ce qu'**elle comporte un dispositif pour le barrage automatique de l'interligne d'étanchéité après la création du vide.
